# EUROPEAN PATENT APPLICATION

(11) **EP 3 399 694 A1**
(43) Date of publication of application: **07.11.2018**
(21) Application number: 17169033.2
(22) Date of filing: 02.05.2017
(51) Int. Cl.: H04L 12/24, H04L 12/26, H04B 3/46, H04L 12/801

(54) **METHOD AND DEVICE FOR ASSESSING A QOS OF DATA COMMUNICATION SYSTEMS**

(71) Applicant: Nokia Solutions and Networks Oy, 02610 Espoo (FI)
(72) Inventor: DIERICKX, Philippe, 6041 Charleroi (BE); DUPUIS, Nicolas, 6041 Charleroi (BE)
(74) Representative: D'Halleweyn, Nele Veerle Trees Gertrudis

(57) **Abstract**

A method for assessing a Quality Of Service (QOS) of a data communication line of a data communication system subject to activation of at least one online rate adaptation mechanism for transparently adapting a data rate on the data communication line based on channel conditions of the data communication line; the method comprising: obtaining, at a computing device, at least one parameter pertaining to at least one prior activation of the at least one online rate adaptation mechanism during a predefined data collection interval; and generating a QOS classification of the data communication line based on the obtained at least one parameter.

## Description

### Field of Invention

The field of the invention relates to assessing a Quality Of Service (QOS) of data communication systems. Particular embodiments relate to a method for assessing a QOS of a data communication line of a data communication system, a monitoring device for assessing a QOS of a data communication line of a data communication system, a quality assessment station for assessing a QOS of a data communication line of a data communication system, and a computer program product.

### Background

In the field of data communication, data communication systems are typically subject to noise - that is, the channel conditions of such data communication systems are subject to variable external influences that can change those channel conditions.

Changes in channel conditions (e.g. changes in crosstalk levels or radio interference levels) can cause data communication systems, in particular wireline systems, to drop a connection. In order to address this problem, online rate adaptation mechanisms has been proposed to transparently (i.e. without any service interruption or bit errors, e.g. by keeping the noise margin in a predefined range) adapt the data rate online (i.e. while in operation). In other words, adaptations of the data rate remain invisible to the end user. To achieve this, changes in channel conditions are detected, and the data rate is adapted to the newly detected channel conditions. In particular, on the one hand, if the noise margin is higher than a predefined upshift noise margin during a predefined upshift interval, the data rate may be increased. On the other hand, if the noise margin is less than a predefined downshift noise margin during a predefined downshift interval, the data rate may be decreased.

A particular example of such an online rate adaptation mechanism is Seamless Rate Adaptation (SRA), in particular in the context of Digital Subscriber Line (DSL) data communication systems. In SRA, the upshift interval is typically predefined as 300 seconds, and the downshift interval is typically predefined as 30 seconds.

The above changes - and by consequence the SRA mechanism - are gradual, i.e. they change slowly. For example, typical interval durations for adapting the data rate are on the order of tens to hundreds of seconds. By contrast, there can additionally or alternatively be sudden large increases in noise or sudden large degradations in Signal to Noise Ratio (SNR). The suddenness of such changes may mean that the gradual approach of the SRA mechanism fails. Such failure can lead to interruption of service and even to a full system retrain. In order to address this problem, another online rate adaptation mechanism has been proposed to maintain at least a minimal connection during a period of sudden degradation. To achieve this, SNR is monitored, and if a sudden degradation is detected, the data rate is adapted to cope with this degradation.

A particular example of such an online rate adaptation mechanism is SOS mode, in particular in the context of DSL data communication systems. Note that 'SOS' is not an acronym in this context. SOS mode uses a new bit-loading to adapt the data rate. In particular, all the used tones of the DSL system are divided into a small number of tone groups during initialisation and the bit-loading reduction in each tone group is constant when SOS is applied.

Note that SOS typically does not provide a way to increase the data rate after it has been adapted due to a sudden noise increase. Rather, SRA is typically used to increase the data rate gradually.

Moreover, some data communication systems also may use a mechanism for automatic performance monitoring and reconfiguration, in order to increase the data rate if it is assumed that channel conditions are stable and can be improved.

A particular example of such a mechanism is Dynamic Line Management (DLM), in particular in the context of DSL data communication systems.

There is currently no way of monitoring performance taking into account the impact of data rate adaptations by such online rate adaptation mechanisms as SRA and SOS. For this reason, mechanisms such as DLM may wrongly assume that channel conditions are stable and can be improved by increasing the data rate, whereas this is not actually the case. In fact, deciding to increase the data rate may be counterproductive, because using such online rate adaptation mechanisms as SRA and SOS may reduce the number of bit errors that occur although there is a lot of noise on the wireline - in other words, the noise is hidden from such mechanisms as DLM.

### Summary

The object of embodiments of the present invention is to obtain a more accurate QOS classification in case online rate adaptation mechanisms are used.

According to a first aspect of the present invention there is provided a method for assessing a Quality Of Service (QOS) of a data communication line of a data communication system subject to activation of at least one rate online adaptation mechanism for transparently adapting a data rate on the data communication line based on channel conditions of the data communication line. The method comprises obtaining, at a computing device, at least one parameter pertaining to at least one prior activation of the at least one rate adaptation mechanism during a predefined data collection interval. The method further comprises generating a QOS classification of the data communication line based on the obtained at least one parameter.

Embodiments of the present invention are based *inter alia* on the insight that online rate adaptation mechanisms may hide changing channel conditions (e.g. due to noise) by transparently reducing the data rate resulting in a lower error rate, but that activation of such online rate adaptation mechanisms should be taken into account in order to obtain a more accurate QOS classification. Because the QOS classification is generated based on at least one parameter pertaining to at least one prior activation of such online rate adaptation mechanisms, it can be ensured that such online rate adaptation mechanisms can not hide the changing channel conditions.

In this context, the term transparently may be interpreted to refer to "without requiring line resynchronization" - that is, any adaptation takes place in a manner that is transparent, so invisible, to the end user.

It will also be understood that it is implicit that the at least one online rate adaptation mechanism (or an entity executing instructions so as to perform the operation of that mechanism or those mechanisms) is configured to obtain those channel conditions, for example either directly by monitoring them, or indirectly by receiving them from a different monitoring entity.

In an embodiment, the obtaining comprises obtaining, at the computing device, at least one parameter representing a number of times that the at least one online rate adaptation mechanism was activated to produce one of a data rate decrease event or a data rate increase event on the data communications line during the predefined data collection interval. Also, the generating of the QOS classification comprises generating a weighting of the obtained at least one parameter representing the number of times, and comparing the generated weighting with at least one first predefined threshold value. In this manner, it is possible to use existing parameters, for example parameters in the context of particular online rate adaptation mechanisms like SRA and SOS, such as RAU (Rate Adaptation Upshift), RAD (Rate Adaptation Downshift), and/or SOS-success, without requiring changes to typical operation of existing online rate adaptation mechanisms.

In a preferred embodiment, the weighting of the obtained at least one parameter representing the number of times is chosen such that a greater weight is associated to a data rate decrease event than to a data rate increase event. In this manner, events with greater importance for an end user can be given more attention.

In another possible embodiment, the predefined data collection interval is at least a time frame of circa 12 hours, preferably a time frame of a multiple of circa 12 hours. Note that the phrase "circa 12 hours" may refer to any time duration of exactly or approximately 12 hours, including any time duration in a range of 6 hours to 18 hours, and preferably in a range of 8 hours to 16 hours. In this manner, overhead can be kept limited.

In an embodiment, the method comprises setting at least one of the predefined data collection interval and an upshift interval of the rate adaptation mechanism, such that the data collection interval is less than or equal to the upshift interval. Also, the obtaining comprises obtaining, at the computing device, at least one parameter representing at least one data rate difference of a data rate of the data communication line, over the data collection interval, due to the at least one prior activation of the at least one online rate adaptation mechanism during the predefined data collection interval. Also, the generating of the QOS classification comprises generating the QOS classification based on the obtained at least one parameter representing the at least one data rate difference and based on at least one second predefined threshold value. Note that the upshift interval may be an interval usable by the at least one online rate adaptation mechanism in order to decide whether or not to increase the data rate on the data communication line. In this manner, a straightforward parameter can be obtained for the data collection interval while ensuring that no online data rate decrease takes place within the data collection interval.

In a presently preferred embodiment, the setting comprises setting the upshift interval to the duration of the predefined data collection interval. In this manner, overhead can be kept limited.

In a further developed embodiment, the predefined data collection interval and the upshift interval are substantially equal, and each of those intervals preferably is circa 15 minutes. Note that the phrase "circa 15 minutes" may refer to any time duration of exactly or approximately 15 minutes, including any time duration in a range of 1 minute to 60 minutes, and preferably in a range of 10 minutes to 30 minutes. In this manner, it can be efficiently ensured that no online data rate decrease takes place within the data collection interval. Furthermore, existing predefined data collection intervals can preferably be maintained.

In a specific embodiment, the weighting of the obtained at least one parameter representing the number of times is chosen such that at least one increased data rate represented by the at least one data rate difference is correlated with at least one data rate increase event, and/or such that at least one decreased data rate represented by the at least one data rate difference is correlated with at least one data rate decrease event. In this manner, both the frequency and the amplitude of the rate adaptations can be taken into account.

According to another aspect of the present invention, there is provided a monitoring device for assessing a Quality Of Service (QOS) of a data communication line of a data communication system subject to activation of at least one online rate adaptation mechanism for transparently adapting a data rate on the data communication line based on channel conditions of the data communication line. The monitoring device comprises obtaining means and generating means. The obtaining means are configured for obtaining, at a computing device, at least one parameter pertaining to at least one prior activation of the at least one online rate adaptation mechanism during a predefined data collection interval. The generating means are configured for generating a QOS classification of the data communication line based on the obtained at least one parameter.

It will be understood by the skilled person that the features, remarks and advantages disclosed hereinabove with respect to various embodiments of the method may also apply, *mutatis mutandis*, to various embodiments of the monitoring device.

In an embodiment, the obtaining means are configured for obtaining, at the computing device, at least one parameter representing a number of times that the at least one online rate adaptation mechanism was activated to produce one of a data rate decrease event or a data rate increase event on the data communication line during the predefined data collection interval. Also, the generating means are configured for generating a weighting of the obtained at least one parameter representing the number of times; and comparing the generated weighting with at least one first predefined threshold value.

In another embodiment, the generating means are configured to chose the weighting of the obtained at least one parameter representing the number of times such that a greater weight is associated to a data rate decrease event than to a data rate increase event.

In a preferred embodiment, the obtaining means are configured such that the predefined data collection interval is at least a time frame of circa 12 hours, preferably a time frame of a multiple of circa 12 hours.

In another possible embodiment, the monitoring device comprises setting means configured for setting at least one of the predefined data collection interval and an upshift interval of the at least one online rate adaptation mechanism, such that the data collection interval is less than or equal to the upshift interval. Also, the obtaining means are configured for obtaining, at the computing device, at least one parameter representing at least one data rate difference of a data rate of the data communication line, over the data collection interval, due to the at least one prior activation of the at least one online rate adaptation mechanism during the predefined data collection interval. Also, the generating means are configured for generating the QOS classification based on the obtained at least one parameter and representing the at least one data rate difference based on at least one second predefined threshold value. Note that the upshift interval may be an interval usable by the at least one online rate adaptation mechanism in order to decide whether or not to increase the data rate on the data communication line.

In a further developed embodiment, the obtaining means are configured such that the predefined data collection interval and the upshift interval are substantially equal, and each of those intervals preferably is circa 15 minutes.

In a specific embodiment, the generating means are configured to chose the weighting of the obtained at least one parameter representing the number of times such that at least one increased data rate represented by the at least one data rate difference is correlated with at least one data rate increase event, and/or such that at least one decreased data rate represented by the at least one data rate difference is correlated with at least one data rate decrease event.

According to another aspect of the present invention, there is provided a quality assessment station for assessing a Quality Of Service (QOS) of a data communication line of a data communication system, the data communication line coupling a network access node and a customer premises equipment, the data communication system being configured for activating at least one rate adaptation mechanism for adapting a data rate on the data communication line based on channel conditions of the data communication line, wherein said quality assessment station comprises a monitoring device according to any one of the embodiments disclosed hereinabove.

It will be understood by the skilled person that the features, remarks and advantages disclosed hereinabove with respect to various embodiments of the method and various embodiments of the monitoring device may also apply, *mutatis mutandis*, to various embodiments of the quality assessment station.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the method may also apply, *mutatis mutandis*, to embodiments of the computer program product.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

### Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:
Figure 1 schematically illustrates operation of an embodiment of a method according to the present invention;
Figure 2 schematically illustrates operation of another embodiment of a method according to the present invention;
Figure 3 schematically illustrates operation of another embodiment of a method according to the present invention;
Figure 4 schematically illustrates an embodiment of a monitoring device according to the present invention, e.g. for performing an embodiment of a method according to the present invention, such as one or more of those shown in Figures 1-3;
Figure 5 schematically illustrates a flowchart of an embodiment of a method according to the present invention; and
Figure 6 schematically illustrates a tree diagram related to embodiments of the present invention.

### Description of embodiments

To cope with changing noise environments, DSL standards have come up with an online rate adaptation (also called On-Line Reconfiguration, OLR) mechanism called Seamless Rate Adaptation (SRA). SRA is used to reconfigure the total data rate by modifying the bitloading over the subcarriers (maximum 128 tones per SRA event). When channel conditions change, SRA will adapt the data rate transparently - that is in "real-time" while in operation without service interruption or line resynchronization. By detecting changes in the channel conditions, the data rate will adapt to the new channel conditions. For example :
- if the noise increases, the date rate will decrease (by increasing the noise margin); and
- if the noise decreases, the data rate will increase (by decreasing the noise margin).

Several parameters have been defined for SRA configuration - mainly Upshift Noise Margin (UNM) and Downshift Noise Margin (DNM). SRA increases the data rate if the noise margin (NM) is greater than UNM during the upshift interval, and decreases the data rate if NM is less than DNM during the downshift interval. The upshift interval is an interval usable by SRA in order to decide whether or not to increase the data rate on the data communication line. Likewise, the downshift interval is also an interval usable by the SRA in order to decide whether or not to decrease the data rate on the data communication line.

Note that SRA is mainly designed for slow-changing channel conditions, as the upshift interval default is 300 seconds (i.e. 5 minutes) and the downshift interval default is 30 seconds.

SRA records two specific parameters representing the number of times a data rate was adapted, which are typically stored in daily or 15 minutes interval counters:
- RAU (Rate Adaptation Upshift), for a data rate increase event; and
- RAD (Rate Adaptation Downshift), for a data rate decrease event.

If noise is aggressive, and if channel conditions change quickly, DSL-based systems might drop their connection, because SRA is too slow (since there are only 128 tones per SRA event and since the downshift interval default is 30 seconds). DSL standards therefore have proposed another online rate adaptation mechanism, called SOS (often taken for "Save Our Showtime"), to ensure that the line will not resynchronize for such quick and aggressive changes of channel conditions.

High, sudden noise increases will lead to a high error rate, such that SRA will not be able to cope. This would result in line resynchronization.

Similarly to SRA, SOS is also an online rate adaptation mechanism, that is used to reconfigure the total data rate by modifying the bitloading over the subcarriers. However, SOS is designed for a rapid data rate reduction by being able to reduce data rate on all subcarriers in one SOS event. The new degraded Signal-to-Noise Ratio (SNR) - due to the sudden noise increase - is then measured, and SOS will apply the calculated SOS data rate reduction based on this new SNR to avoid line resynchronization.

Note that when the noise disappear, the data rate increase is typically performed using the slower SRA upshift mechanism.

SOS can be understood as a quick and global SRA downshift to avoid losing end-user showtime in case of big and sudden changes of noise conditions.

Several parameters are defined for SOS configuration, including:
- SOS-TIME: Duration of the interval used in the standard SOS triggering criteria;
- SOS-NTONES: Minimum percentage of tones that must be degraded persistently across time, to arm the first sub-condition of the SOS trigger criteria;
- SOS-CV: Minimum number of normalized CRC anomalies received within time, to arm the second sub-condition of the SOS trigger criteria; and
- SOS Minimum Rate: an SOS procedure should not lead to a data rate lower than the configured SOS Minimum Rate, otherwise the line will resynchronize.

SOS also records a specific parameter, which is stored in daily or 15 minutes interval counters:
- SOS-success: number of successful SOS events.

It will be understood that SRA and SOS are merely two examples of online rate adaptation mechanisms, and that other such mechanisms may additionally or alternatively be used in combination with embodiments of the present invention. Moreover, it will also be understood that embodiments of the present invention may also be used in combination with just one such online rate adaptation mechanism, preferably one that is adapted to at least decrease the data rate.

Without additional metrics specific to online rate adaptation mechanisms such as SRA and SOS, it is currently not possible to quantify and have a reporting view of the QOS classification when online rate adaptation mechanisms are triggered. On top of this, as the QOS classification may be used for automatic optimization systems, like DLM (Dynamic Line Management), it is advantageous to take the right decision of line optimization or stabilization based on the QOS classification. If the QOS classification does not take into account the online rate adaptation mechanisms, DLM might make the wrong assumption of the data communication line being stable and might choose to optimize the data communication line by boosting the data rate. This decision would be counterproductive in case of a SRA or SOS data rate degradation due to "hidden" noise conditions. These noise conditions are called "hidden" because SRA and SOS will reduce the amount of errors compared to the same data communication line without SRA/SOS in the same noise conditions.

Activation of the data rate adaptation mechanism(s) impacts end-user experience specifically in the context of IPTV where the set-top box contains a very small memory buffer (corresponding to around one second of video streaming). Nowadays, in high demanding data rate application like HD TV, multiple HD TVs or 4K streaming, if the data rate can't be guaranteed or maintained, it will generate video artifacts or freezes, that will have a high impact on end-user experience.

As the existing error counters (CV (Coding Violations, for Cyclic Redundancy Check errors), ES (Errored Seconds), SES (Severely Errored Seconds) and SR (Spontaneous Resynchronization)) fail to provide sufficient information in case of data rate decreases due to online rate adaptation mechanisms, it is advantageous to quantify more accurately the data rate adaptations (especially decreases) using an improved QOS classification, adapted to use of online rate adaptation mechanisms like SRA and SOS.

Telecommunication operators are more and more using online rate adaptation mechanisms (such as SRA and SOS) to protect their DSL networks against slowly changing (SRA) and aggressive noise (SOS) conditions. This usually improves the end-user experience even if those mechanisms will (temporarily) reduce the data rate. Their main goal is to avoid line resynchronization, meaning a drop of DSL connection having a very noticeable impact on end-user experience. Their second goal is to reduce the number of errors on the DSL line by reducing (temporarily) the data rate.

This improves the end-user experience as they will suffer less of image freezes or artefacts in video streams (IPTV), at the expense of a reduced bandwidth.

Even if the online rate adaptation mechanism(s) will improve the end-user experience, it is important to take into account the activation of that/those online rate adaptation mechanism(s) when estimating QOS. When the noise conditions increase on the data communication line, the number of errors will increase and those mechanisms will, by design, reduce the data rate in such conditions, resulting in a decrease of errors to an acceptable error rate. This means that after the initial burst of errors, when the online rate adaptation mechanisms are applied, the error rate will likely remain acceptable and the standard QOS classification will not reflect the loss of data rate experienced on the data communication line.

The loss of data rate has a direct impact on end-user experience mainly in the context of IPTV, because if the data rate can't be maintained for video streaming, the end-user will experience freezing of the video. Also, since video streaming systems are demanding more and more bandwidth (HD TV, multiple HD TV, 4K TV, ...), in case the provided bandwidth is near the limit of the needed bandwidth, a data rate reduction will likely have a noticeable impact on the end user experience.

In the context of online rate adaptation mechanisms, it is therefore important to somehow quantify those mechanisms, for a more accurate QOS estimation.

Unlike the approach taken in EP 3024176 (A1), targeting G.INP(RTX) (physical layer retransmission for Impulse Noise Protection), it is not possible to rely on the therein defined minimum Error Free Throughput (minEFTR) to estimate the amplitude of the worst data rate decrease over a given period of time (e.g. 15 minutes, or daily). This minEFTR is only present in the context of G.INP(RTX) and represents the data rate decrease related to the retransmission on PHY layer in case of corrupted packets. Even if an online rate adaptation mechanism like SRA or SOS is used in parallel with G.INP, the minEFTR will not represent the data rate decrease due to activation of that online rate adaptation mechanism.

In the following description, a first embodiment will be described in more detail. It is to be understood that this first embodiment is presented for exemplary purposes, and that particular features presented in its context may be left out or may be added, according to the understanding of the skilled person, and that the same applies for the other embodiments presented below.

Unfortunately, unlike for G.INP where a minEFTR metric is defined, there is currently no specific DSL metric which will quantify the data rate decrease in the specific context of such online rate adaptation mechanisms as SRA or SOS. The only option currently is to rely on the actual data rate, but this would require to collect (very) frequently the actual data rate to derive a parameter like the minimum data rate throughput for each interval.

For sure, daily collected data would not provide the needed accuracy, as SRA and SOS downshift events typically occur on a very different timescale (SRA : minutes, SOS : seconds).

For typical monitoring devices, there is a 15 minute data collection interval that would permit in very specific conditions to monitor data rate decreases and/or increases due to activation of such online rate adaptation mechanisms like SRA and SOS.

For this, it's needed that the data collection occurs more frequently than a sequence of data rate adaptations (e.g. SRA/SOS downshift (i.e. data rate decrease) and SRA upshift (i.e. data rate increase)) that would restore the data rate to the same level as before the transient noise impacted the line.

In practice, it is advantageous to maintain the configurations of SRA and SOS for the downshift, as it helps to keep the data communication line in service. However, the SRA configurations can be modified for the upshift, as the only drawback would be that the data communication line will take a bit more time to recover the original data rate after the transient noise has disappeared.

Note that in case of SOS, the data rate decrease is performed thanks to SOS (and thus very quickly) but the data rate increase (after the noise) is performed due to SRA upshift.

For example, to cope with a 15 minute data collection interval, the upshift interval could for example be set from the 300 seconds default value to 900 seconds. This would ensure that SRA downshift and upshift will not be activated during one data collection interval of 15 minutes (i.e. 900 seconds). Alternatively, the data collection interval could also be set based on the upshift interval, but this option is presently less preferred.

With this in place, the data rate can be collected every 15 minutes, while ensuring that if one or more online rate adaptation mechanisms impact the data rate, this will be reflected. It is then possible to define a metric similar to the above-discussed minEFTR representing the highest data rate decrease (also called bitrate (BR) decrease or bitrate (BR) drop) over one day (corresponding to 96 intervals of 15 minutes), which is a handy representation for operators, as shown in the following pseudo-code:
- maxBRdrop(previous_day) = max(ActualBR(interval 1:96)) - min(ActualBR(interval 1:96))

For example, using thresholds, a QOS classification may then be generated that takes into account the online rate adaptation mechanisms, as shown in the following pseudo-code:

```
        If maxBRdrop(previous_day) > setting.highThreshold:
          OLR_QoS(previous_day) =BAD;
        Elseif maxBRdrop(previous_day) <= setting. highThreshold &&
        maxBRdrop(previous_day) > setting. lowThreshold:
          OLR_QoS(previous_day) = RISKY;
        Elseif maxBRdrop(previous_day) <= setting. lowThreshold:
          OLR_QoS(previous_day) = GOOD;
        End.
```

It will of course be understood that this pseudo-code as well as other pseudo-code in this specification is for exemplary purposes only, and is not meant to be interpreted in a limiting manner. In particular, both in this pseudo-code and the other pseudo-code, it may be possible to optimize the program flow further, e.g. by reducing the number of logical checks.

The meaning of "good" for a certain interval may for example be that the data rate is more than sufficient for transmitting a certain type of data (e.g. High speed Internet, Video etc.) without introducing errors in the transmission (at the upper-layers of protocols). The meaning of "risky" for a certain time interval may for example be that the data rate is possibly, especially in case of potential errors, not sufficient for transmitting a certain type of data (e.g. High speed Internet, Video etc.) without introducing errors in the transmission. The meaning of "bad" for a certain time interval may for example be that the data rate is not sufficient for transmitting a certain type of data (e.g. High speed Internet, Video etc.) without introducing errors in the transmission.

This provides only one single value each day for maxBRdrop but it does not provide any indication of the frequency for such data rate decrease events. Also, it is preferred to set the SRA upshift interval to no less than the data collection interval, in order to ensure that no data rate decrease is unnoticed during the interval. To keep the SRA upshift interval to a default value of 300 seconds, this would imply that the actual data rate is collected every 300 seconds. This also would imply that 15 minutes (or faster) data collection is activated in order to derive a daily value for maxBRdrops.

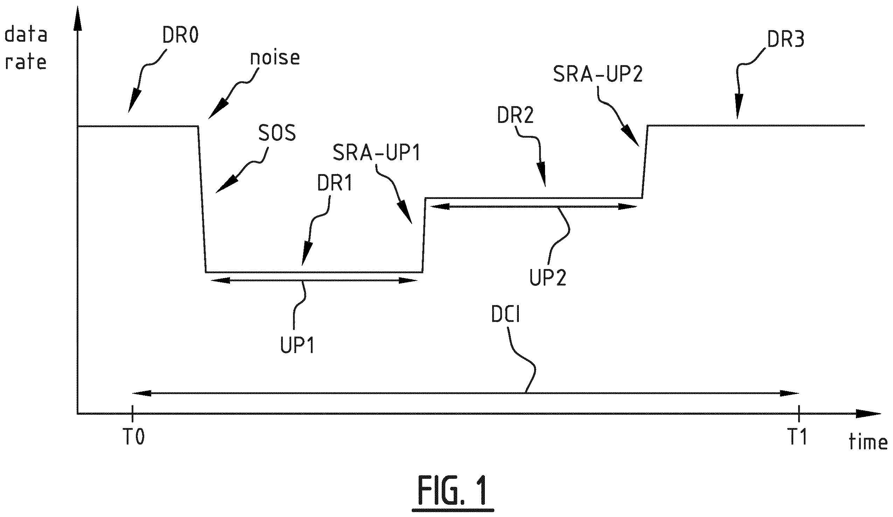

Figure 1 schematically illustrates operation of an embodiment of a method according to the present invention, corresponding to this first embodiment. The figure shows a horizontal time axis (e.g. expressed in seconds) and a vertical data rate axis (e.g. expressed in bits per second). The figure further shows a data rate DR0, DR1, DR2, DR3 on a data communication line of a data communication system subject to activation of at least one online rate adaptation mechanism for transparently adapting the data rate.

It can be seen from the figure that the data rate is initially DR0, that a noise event or increase occurs (indicated with the arrow "noise"), leading to activation of one or more online rate adaptation mechanisms (here only SOS) which (significantly) decreases the data rate to DR1. During upshift interval UP1, this data rate DR1 is maintained. Therefore, after UP1, one or more online rate adaptation mechanisms (here SRA upshift) may increase the data rate to DR2 - this data rate increase event is indicated with SRA-UP1. Likewise, after UP2, a data rate increase event may occur due to SRA upshift (indicated with SRA-UP2) to increase the data rate to DR3.

Meanwhile, at T0, data collection may have taken place. After a data collection interval DCI, thus at T1, data collection may again take place. If no further provisions are made, it can be understood that the data collection at T0 and T1 will not reveal the occurrence of the noise and the ensuing data rate adaptations. Therefore, in this embodiment, there is obtained, at a computing device, at least one parameter representing a number of times that the at least one online rate adaptation mechanism was activated to produce one of a data rate decrease event or a data rate increase event on the data communication line during the predefined data collection interval. In this particular case, this or these parameters will show one SOS-success and two SRA upshifts. This information can allow a monitoring device to generate a QOS classification of the data communication line. In a preferred embodiment, this involves generating a weighting of the obtained at least one parameter representing the number of times; and comparing the generated weighting with at least one first predefined threshold value.

In the following description, a second embodiment will be described in more detail:
Using daily data collection, the following parameters representing a number of times that the at least one online rate adaptation mechanism was activated to produce one of a data rate decrease event or a data rate increase event on the data communication line during the predefined data collection interval can be obtained (the following parameters are specific examples of SRA and SOS counters):
   - RAU (Rate Adaptation Upshift), for a data rate increase event;
   - RAD (Rate Adaptation Downshift), for a data rate decrease event; and
   - SOS-success : number of successful SOS counter.

As SOS, compared to SRA downshift, has a much greater impact on the data rate, it is then advantageous to define a weighted sum, in order to better balance the impact of SOS and SRA on the QOS.

Also, the QOS might or might not take into account the SRA upshift, depending on whether or not the operator would like to focus only on the data rate degradation for the QOS or if they consider that the SRA data rate increase would counterbalance the end-user experience.

It then becomes possible to define a generic formula like the following (expressed in pseudo-code):
- OLR_score(previous_day) = X * SRA_Downshift + Y * SOS_success - Z * SRA_Upshift

In this formula, X,Y and Z may be defined based on the experience and specific wishes of the telecommunication operator (e.g. Z=0 means that SRA upshift are not taken into account).

Then a QOS classification may be generated, for example using one or more predefined thresholds, that takes into account the potential activation of the online rate adaptation mechanisms:

```
        If OLR_score(previous_day) > setting.highThreshold
          OLR_QoS(previous_day) = BAD;
        Elseif OLR_score(previous_day) <= setting. highThreshold && OLR_score(previous_day)
 > setting. lowThreshold
          OLR_QoS(previous_day) = RISKY;
        Elseif OLR_score(previous_day) <= setting. lowThreshold
          OLR_QoS(previous_day) = GOOD;
        End.
```

Compared to the above presented first embodiment, this embodiment does not expect a 15 minute data collection interval, and also does not require to reconfigure the default SRA upshift interval.

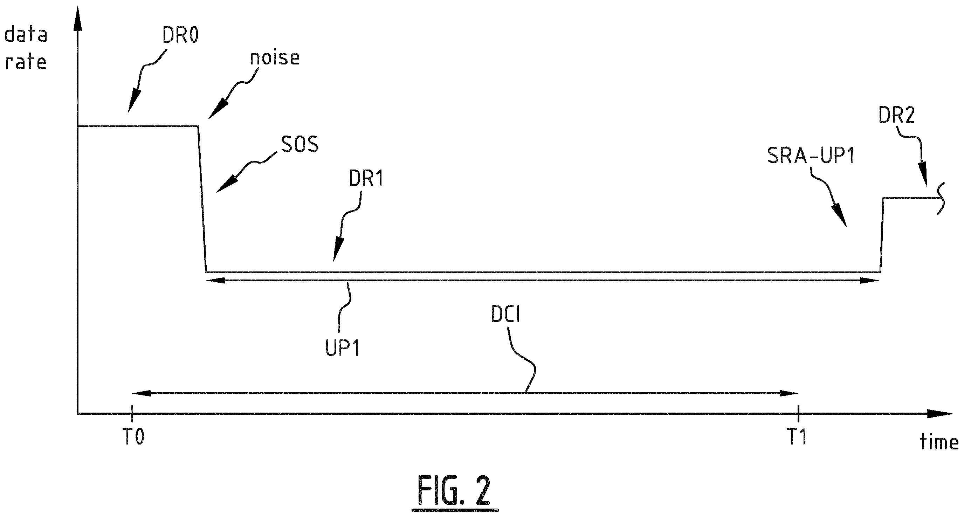

Figure 2 schematically illustrates operation of another embodiment of a method according to the present invention, corresponding to this second embodiment. The figure corresponds with Figure 1, but does not require that the one or more parameters representing a number of times that the at least one online rate adaptation mechanism was activated are obtained. Instead, in this embodiment, the upshift interval may have been set such that it is greater than the data collection interval, to ensure that data collection registers any downshifts. This is shown in the figure by the relative length of upshift interval UP1 compared to that of Figure 1, and compared to the length of the data collection interval DCI.

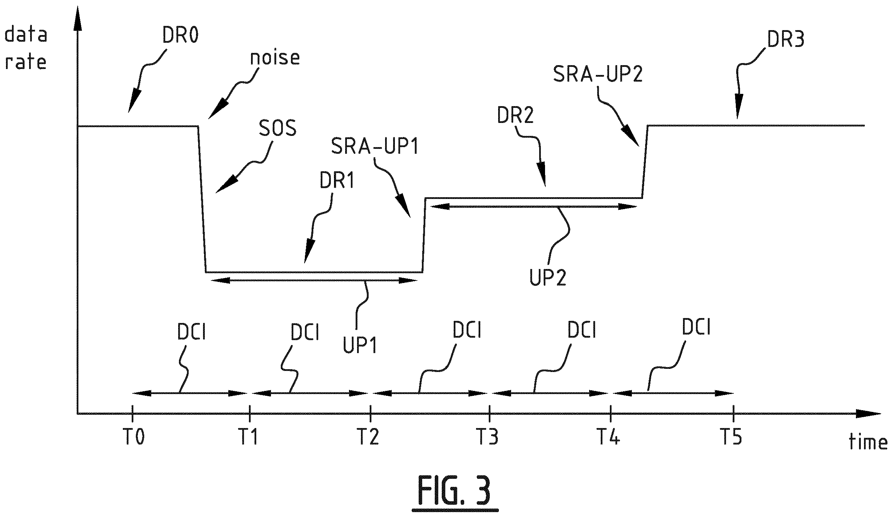

Figure 3 schematically illustrates operation of another embodiment of a method according to the present invention, corresponding to an alternative of this second embodiment. This figure also corresponds with Figure 1, but does not require that the one or more parameters representing a number of times that the at least one online rate adaptation mechanism was activated are obtained. Instead, in this embodiment, the data collection interval may have been set such that it is less than the upshift interval, to ensure that data collection registers any downshifts. This is shown in the figure by the relative length of the data collection intervals DCI compared with those of Figure 1, and compared to the length of the upshift intervals UP1 and UP2.

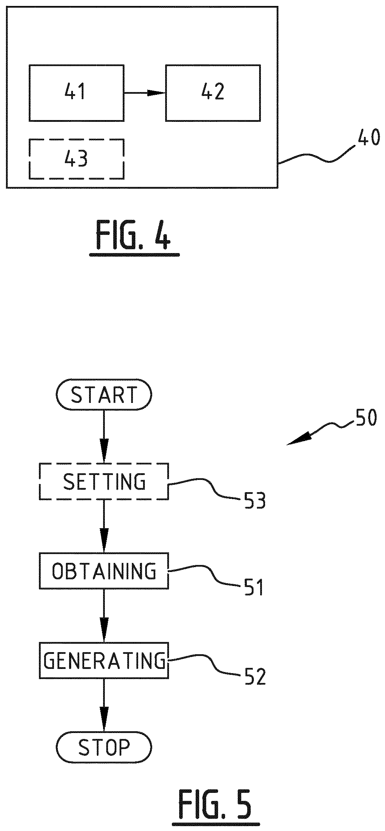

Figure 4 schematically illustrates an embodiment of a monitoring device 40 according to the present invention, e.g. for performing an embodiment of a method according to the present invention, such as one or more of those shown in Figures 1-3. The monitoring device 40 is shown comprising obtaining means 41 and generating means 42. The obtaining means 41 are configured for obtaining, at a computing device, at least one parameter pertaining to at least one prior activation of the at least one online rate adaptation mechanism during a predefined data collection interval. The generating means 42 are configured for generating a QOS classification of the data communication line based on the obtained at least one parameter.

In a further developed embodiment, the monitoring device 40 may also optionally comprise setting means 43 configured for setting at least one of the predefined data collection interval and an upshift interval of the at least one online rate adaptation mechanism, such that the data collection interval is less than or equal to the upshift interval; wherein the upshift interval is an interval usable by the at least one online rate adaptation mechanism in order to decide whether or not to increase the data rate on the data communication line.

Figure 5 schematically illustrates a flowchart of an embodiment of a method 50 according to the present invention. The method 50 is shown comprising operation 51, namely obtaining, at a computing device, at least one parameter pertaining to at least one prior activation of the at least one online rate adaptation mechanism during a predefined data collection interval; and operation 52, namely generating a QOS classification of the data communication line based on the obtained at least one parameter.

In a further developed embodiment, the method 50 may also optionally comprise operation 53, namely setting at least one of the predefined data collection interval and an upshift interval of the at least one online rate adaptation mechanism, such that the data collection interval is less than or equal to the upshift interval; wherein the upshift interval is an interval usable by the at least one online rate adaptation mechanism in order to decide whether or not to increase the data rate on the data communication line.

In the following description, a third embodiment will be described in more detail:
This third embodiment combines aspects of the above presented first and second embodiments. In other words, using a 15 minutes data collection interval for SRA and SOS counters (i.e. one or more parameters representing a number of times that the one or more online rate adaptation mechanisms were activated to produce one of a data rate decrease event or a data rate increase event on the data communication line during the predefined data collection interval) together with the actual data rate or data rate difference (i.e. one or more parameter representing at least one data rate difference of a data rate of the data communication line, over the data collection interval, due to one or more prior activations of the online rate adaptation mechanisms during the predefined data collection interval). Again, just as for the first embodiment, it should be ensured that no data rate decrease goes unnoticed during the data collection interval, for example by increasing the upshift interval and/or by decreasing the data collection interval. In this manner, it becomes possible to correlate activations of the online rate adaptation mechanism (e.g. SRA and SOS events) with the data rate decreases or increases.

For each 15 minutes (t) data collection interval, the following can be recorded (in particular for SRA/SOS):
- Actual_BR(t): a parameter representing the actual data rate.
- SOS_success(t): a parameter representing the number of times SOS was successfully activated.
- SRA_Downshift(t): a parameter representing the number of times SRA was activated (by downshifting, i.e. decreasing the data rate).
- SRA_Upshift(t) : a parameter representing the number of times SRA was activated (by upshifting, i.e. increasing the data rate).

It is possible to define BRchange, as shown in the following pseudo-code: BRchange([t-15min:t]) = Actual_BR(t) - Actual_BR(t-15min).
- If BRchange < 0, it means that there was a BR decrease that will be correlated with SRA_Downshift event or SOS_success event in interval t-15min.
- If BRchange > 0, it means that there was a BR increase that will be correlated with SRA_Upshift event in interval t-15min.

It is then possible to better quantify the data rate decrease and/or increase due to the online rate adaptation mechanism(s).

Referring to the previous formula related to the weighted sum of online rate adaptation events (daily) - OLR_score(previous_day) =X * SRA_Downshift + Y * SOS_success - Z * SRA_Upshift.

With a 15 minutes data collection interval, the X,Y and Z parameters can be linked to the BRchange value to have a well-defined weighted sum which better represent the frequency (events) and the amplitude (BRchange) of the data rate adaptations.

The formula then may become as follows (shown as pseudo-code): OLR_score(t) = BRchange(SRA_Down)* SRA_Downshift + BRchange(SOS)*SOS_success - Z * BRchange(SRA_Up) * SRA_Upshift

In this formula, BRchange(SRA_Down) is the data rate (also called bitrate, BR) decrease (t) which is correlated to SRA_Downshift event (t-15min); BRchange(SOS) is the data rate decrease (t) which is correlated to SOSsuccess event (t-15min); BRchange(SRA_Up) is the data rate increase (t) which is correlated to SRA_Upshift event (t-15min); and Z is an optional counterbalance factor to partially take into account the SRA_Upshift data rate increase.

From this 15 minutes-based metric, a daily OLR_QOS may be derived to better represent the data rate adaptations (i.e. data rate increases and/or data rate decreases) on the data communication line due to activation of the rate adaptation mechanisms.

Using thresholds for example, each data collection interval may be classified as "good", "bad" or "risky".

```
        If OLR_score(previous_interval) > setting.highThreshold
          OLR_QoS(previous_interval) = BAD;
        Elseif OLR_score(previous_ interval) <= setting. highThreshold &&
 OLR_score(previous_ interval) > setting. lowThreshold
          OLR_QoS(previous_ interval) = RISKY;
        Elseif OLR_score(previous_ interval) <= setting. lowThreshold
          OLR_QoS(previous_ interval) = GOOD;
        End.
```

Then, using a ratio between bad, risky and good period, it is possible to define a daily OLR_QOS, for example using the following pseudo-code:
- Ratio(day)=(Number(BAD(15min)) + ½ * Number(RISKY(15min))) / Number(ALL(15min))

```
        If Ratio(day) < settings.classificationLow
          OLR_QoS(day)=GOOD;
        Elseif Ratio(day) ≥ settings.classificationLow && Ratio(day) <=
 settings.classificationHigh
          OLR_QoS(day)=RISKY;
        Elseif Ratio(day) > settings.classificationHigh
          OLR_QoS(day)=BAD;
        End.
```

Usually telecommunications operators focus more on data communication line instabilities and data rate decreases. If the data rate increase is not included (e.g. by setting Z=0), it also possible to define a metric for the Mean Time Between Drops/Decreases (MTBD), for example using the following pseudo-code:
- MTBD(day) = Amount(showtime(15min))/(Number(BAD(15min)+1/2*RISKY(15min));

```
        If MTBD(day) < settings.classificationLow
          OLR_QoS(day)=BAD;
        Elseif MTBD(day) ≥ settings.classificationLow && MTBD(day) <=
 settings.classificationHigh
          OLR_QoS(day)=RISKY;
        Elseif MTBD(day) > settings.classificationHigh
          OLR_QoS(day)=GOOD;
        End.
```

Referring to the approach taken in EP 3024176 (A1), targeting G.INP(RTX), in a further developed embodiment, the data rate decreases may be seen as a global metric whatever the mechanism linked to the decrease:
- Reduce data rate due to retransmission (G.INP);
- Reduced data rate due to slowly changing noise condition on the line (SRA); and
- Reduced data rate due to sudden aggressive noise condition on the line (SOS).

It may be contemplated to use a global metric (for example called MTBD_GENERIC) such that the throughput quality indicator is not only linked to G.INP but also extended to online rate adaptation mechanisms such as SRA and SOS (or other on-line reconfiguration mechanisms). This metric may for example be defined as a union over separate time intervals of one or more existing MTBD metrics (e.g. that or those defined in relation to G.INP) and the above-defined MTBD metric in relation to the online rate adaptation mechanisms.

Furthermore, the QOS classification can be further improved using MTBD extended to online rate adaptation mechanisms such as SOS and SRA, for example by combining one or more existing MTBE metrics and/or MTBR metrics (e.g. that or those defined in relation to G.INP) with the above-defined MTBD_GENERIC, e.g. using a set intersection.

This new metric can moreover also be used to improve decision-making for DLM in the context of online rate adaptation mechanisms such as SRA or SOS. Typical DLM operations on data communication lines not subject to activation of online rate adaptation mechanisms such as SRA or SOS are as follows:
- In case of bad MTBR: A bad MTBR (modem resynchronizing too often) is usually an indication that the data communication line cannot cope with the slowly varying stationary noise. The main action to be taken in such a case consists in increasing the Noise Margin (hence decreasing the data rate).
- In case of bad MTBE: A bad MTBE is usually an indication that the data communication line suffers from bursts of impulse noise, causing some transmission errors during short but repetitive periods of time. The appropriate action to be performed in such a case would be to increase the INP protection (for instance by increasing the IFEC (Interleaving Forward Error Correction) minimum INP and/or interleave maximum delay). The MTBE can be computed based on CV counters, but also on ES and SES counters. Indeed, high ES and SES counters are usually an indication of very strong but short bursts of impulse noise.

- For slowly varying stationary noise (linked to bad MTBR), the DLM engine will have the same behavior as SRA: increasing the Noise Margin, resulting in a decrease of the data rate.
- For burst of impulse noise (linked to bad MTBE), the DLM engine will act differently than SOS as DLM will increase line protection parameters (INP/MaxDelay) and SOS will significantly decrease the data rate to cope with the sudden high noise. But the trigger of both mechanisms is the same: a high error rate.
- For both types of noise, the DLM and SRA/SOS operate on a different timescale as DLM typically acts only once a day compared to SRA/SOS which might apply the same mechanism several times a day.

Taking one specific data communication line as an example, with slowly varying stationary and aggressive noise conditions, it can be readily understood that:
- If SRA and SOS are not activated on the line, the noise conditions will generate a specific amount of errors (CV/ES/SES) and resynchronizations (SR). As the DLM will process those counters (MTBE/MTBR), it will take the appropriate action based on the defined thresholds, for example decreasing the data rate and/or increasing INP/MaxDelay. This will better protect the line and reduce the number of detected errors the next days. Finally, the DLM will converge to the optimal line parameters for the highest data rate without errors on the line.
- If SRA and SOS are activated on the line, depending of the noise pattern, SRA and SOS will decrease the data rate to avoid line resynchronization (SR) and errors (CV/ES/SES). This means that in the same noise conditions, the amount of errors and resynchronizations will be less than without SRA and SOS. Again, DLM will process those counters (MTBE/MTBR) and will take the appropriate action based on the defined thresholds.

This may lead to several outcomes:
- In the best case, the amount of errors will be enough to trigger a correct DLM action (decrease the data rate and increase INP/MaxDelay). This will better protect the line and reduce the number of detected errors the next days.
- In the average case, with the amount of errors detected, DLM will consider the data communication line as stable and will not increase the data rate. If the same noise occurs the next days, it's then possible that every day SRA or SOS mechanisms are activated on the data communication line resulting in a frequently varying data rate for the end-user without any DLM action to stabilize the data communication line.
- In the worst case, with a low amount of errors detected, DLM will consider the data communication line as stable and increase the data rate. If the same noise occurs the next days, the SRA or SOS mechanisms will generate bigger data rate decreases. They may not even be able to cope with that situation, which could result in a line resynchronization.

As explained, using online rate adaptation mechanisms on a data communication line that is also subject to DLM operation might generate issues like increasing the number of data rate increase or decrease events, and increasing the amplitude of the data rate decreases. The DLM operation might also diverge - that is, it may be unable to propose the optimal data communication line parameters after several days of DLM iteration.

To better cope with online rate adaptation mechanisms like SRA and SOS, DLM should therefore have an additional input which indicates the frequency and the amplitude of the their data rate adaptations, preferably in particular the data rate decreases. With such an additional input (e.g. the above-described MTBD metric), DLM will not consider a data communication line with data rate decreases as stable. DLM will then be able to take the appropriate action in case of a data rate decrease detected on the data communication line (decrease the data rate or increase INP/MaxDelay) to reduce the number of SRA/SOS the next days, meaning an improved end-user experience as the end-user data rate will remain more stable.

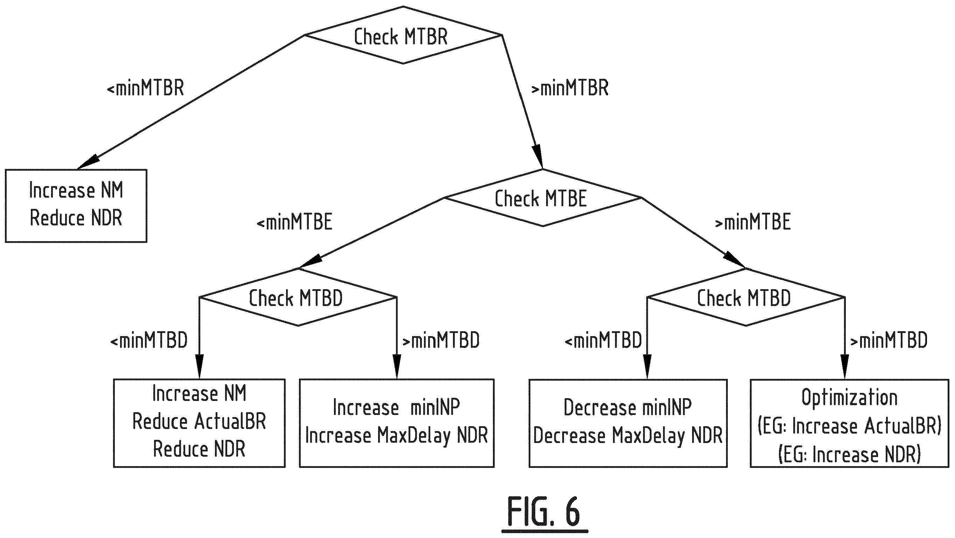

Figure 6 shows a further development of the tree-diagram shown in Figure 4 of EP 3024176 (A1), targeting G.INP(RTX). Compared to this previously known tree-diagram, embodiments of the present invention may take additional actions (each time indicated with the penultimate line in the terminal operations). In particular, it may be decided to reduce the actual data rate (ActualBR) in the MTBR is less than the minimum MTBR. It may else be checked whether the MTBE is less than the minimum MTBE. If so, it may be checked whether the MTBD is less than the minimum MTBD, and if so it may be decided to reduce the actual data rate, or else it may be decided to increase the minimum Impulse Noise Protection. If the MTBE is greater than the minimum MTBE, it may be checked whether the MTBD is less than the minimum MTBD, and if so it may be decided to decrease the minimum Impulse Noise Protection, or else it may be decided to for example increase the actual data rate.

The choice of which specific embodiment of the present invention to use may for example advantageously depend on such factors as data availability, constraints and implementation complexity.

Embodiments of the present invention as described above may be advantageously applied especially in a context of wireline systems such as DSL. However, the notions and advantages of the present disclosure may also find application outside of the domain of wireline systems, and may for example also be applied to other data communication systems operating over different mediums, or using different but comparable types of online rate adaptation mechanisms than those discussed herein.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

1. A method for assessing a Quality Of Service (QOS) of a data communication line of a data communication system subject to activation of at least one online rate adaptation mechanism for transparently adapting a data rate on the data communication line based on channel conditions of the data communication line; the method comprising:
- obtaining, at a computing device, at least one parameter pertaining to at least one prior activation of the at least one online rate adaptation mechanism during a predefined data collection interval; and
- generating a QOS classification of the data communication line based on the obtained at least one parameter.

2. The method of claim 1,
wherein the obtaining comprises:
- obtaining, at the computing device, at least one parameter representing a number of times that the at least one online rate adaptation mechanism was activated to produce one of a data rate decrease event or a data rate increase event on the data communication line during the predefined data collection interval; and
wherein the generating of the QOS classification comprises:
- generating a weighting of the obtained at least one parameter representing the number of times; and
- comparing the generated weighting with at least one first predefined threshold value.

3. The method of claim 2,
wherein the weighting of the obtained at least one parameter representing the number of times is chosen such that a greater weight is associated to a data rate decrease event than to a data rate increase event.

4. The method of claim 1 or 2,
wherein the predefined data collection interval is at least a time frame of circa 12 hours, preferably a time frame of a multiple of circa 12 hours.

5. The method of any one of the claims 1-3,
comprising:
- setting at least one of the predefined data collection interval and an upshift interval of the at least one online rate adaptation mechanism, such that the data collection interval is less than or equal to the upshift interval; wherein the upshift interval is an interval usable by the at least one online rate adaptation mechanism in order to decide whether or not to increase the data rate on the data communication line;
wherein the obtaining comprises:
- obtaining, at the computing device, at least one parameter representing at least one data rate difference of a data rate of the data communication line, over the data collection interval, due to the at least one prior activation of the at least one online rate adaptation mechanism during the predefined data collection interval; and
wherein the generating of the QOS classification comprises:
- generating the QOS classification based on the obtained at least one parameter representing the at least one data rate difference and based on at least one second predefined threshold value.

6. The method of claim 5,
wherein the predefined data collection interval and the upshift interval are substantially equal, and wherein each of those intervals preferably is circa 15 minutes.

7. The method of claim 5 or 6 when dependent on any one of claims 2-3,
wherein the weighting of the obtained at least one parameter representing the number of times is chosen such that at least one increased data rate represented by the at least one data rate difference is correlated with at least one data rate increase event, and/or such that at least one decreased data rate represented by the at least one data rate difference is correlated with at least one data rate decrease event.

8. A monitoring device for assessing a Quality Of Service (QOS) of a data communication line of a data communication system subject to activation of at least one online rate adaptation mechanism for transparently adapting a data rate on the data communication line based on channel conditions of the data communication line; the monitoring device comprising:
- obtaining means configured for obtaining, at a computing device, at least one parameter pertaining to at least one prior activation of the at least one online rate adaptation mechanism during a predefined data collection interval; and
- generating means configured for generating a QOS classification of the data communication line based on the obtained at least one parameter.

9. The monitoring device of claim 8,
wherein the obtaining means are configured for:
- obtaining, at the computing device, at least one parameter representing a number of times that the at least one online rate adaptation mechanism was activated to produce one of a data rate decrease event or a data rate increase event on the data communication line during the predefined data collection interval; and
wherein the generating means are configured for:
- generating a weighting of the obtained at least one parameter representing the number of times; and
- comparing the generated weighting with at least one first predefined threshold value.

10. The monitoring device of claim 9,
wherein the generating means are configured to chose the weighting of the obtained at least one parameter representing the number of times such that a greater weight is associated to a data rate decrease event than to a data rate increase event.

11. The monitoring device of claim 8 or 9,
wherein the obtaining means are configured such that the predefined data collection interval is at least a time frame of circa 12 hours, preferably a time frame of a multiple of circa 12 hours.

12. The monitoring device of any one of the claims 8-11,
comprising:
- setting means configured for setting at least one of the predefined data collection interval and an upshift interval of the at least one online rate adaptation mechanism, such that the data collection interval is less than or equal to the upshift interval; wherein the upshift interval is an interval usable by the at least one online rate adaptation mechanism in order to decide whether or not to increase the data rate on the data communication line;
wherein the obtaining means are configured for:
- obtaining, at the computing device, at least one parameter representing at least one data rate difference of a data rate of the data communication line, over the data collection interval, due to the at least one prior activation of the at least one online rate adaptation mechanism during the predefined data collection interval; and
wherein the generating means are configured for:
- generating the QOS classification based on the obtained at least one parameter representing the at least one data rate difference and based on at least one second predefined threshold value.

13. The monitoring device of claim 12,
wherein the obtaining means are configured such that the predefined data collection interval and the upshift interval are substantially equal, and wherein each of those intervals preferably is circa 15 minutes.

14. The monitoring device of claim 12 or 13 when dependent on any one of claims 9-10,
wherein the generating means are configured to chose the weighting of the obtained at least one parameter representing the number of times such that at least one increased data rate represented by the at least one data rate difference is correlated with at least one data rate increase event, and/or such that at least one decreased data rate represented by the at least one data rate difference is correlated with at least one data rate decrease event.

15. A computer program product comprising a computer-executable program of instructions for performing, when executed on a computer, the steps of the method of any one of claims 1-7.

## Amended claims

### Amended claims in accordance with Rule 137(2) EPC.

1. A method for automatic monitoring and reconfiguring a data communication line subject to activation of at least one online rate adaptation mechanism for transparently adapting a data rate on the data communication line based on channel conditions of the data communication line, the method comprising:
- assessing a Quality Of Service (QOS) of the data communication line of a data communication system;
- obtaining (51), at a computing device, at least one parameter pertaining to at least one prior activation of the at least one online rate adaptation mechanism during a predefined data collection interval; and
- generating (52) a QOS classification of the data communication line based on the obtained at least one parameter;
- reconfiguring the data communication line based on the generated QOS classification; **characterised in that**
- said at least one online rate adaptation mechanism comprises one or both of SRA and SOS.

2. The method of claim 1,
wherein the obtaining comprises:
- obtaining, at the computing device, at least one parameter representing a number of times that the at least one online rate adaptation mechanism was activated to produce one of a data rate decrease event or a data rate increase event on the data communication line during the predefined data collection interval; and
wherein the generating of the QOS classification comprises:
- generating a weighting of the obtained at least one parameter representing the number of times; and
- comparing the generated weighting with at least one first predefined threshold value.

3. The method of claim 2,
wherein the weighting of the obtained at least one parameter representing the number of times is chosen such that a greater weight is associated to a data rate decrease event than to a data rate increase event.

4. The method of claim 1 or 2,
wherein the predefined data collection interval is at least a time frame of circa 12 hours, preferably a time frame of a multiple of circa 12 hours.

5. The method of any one of the claims 1-3,
comprising:
- setting at least one of the predefined data collection interval and an upshift interval of the at least one online rate adaptation mechanism, such that the data collection interval is less than or equal to the upshift interval; wherein the upshift interval is an interval usable by the at least one online rate adaptation mechanism in order to decide whether or not to increase the data rate on the data communication line;
wherein the obtaining comprises:
- obtaining, at the computing device, at least one parameter representing at least one data rate difference of a data rate of the data communication line, over the data collection interval, due to the at least one prior activation of the at least one online rate adaptation mechanism during the predefined data collection interval; and
wherein the generating of the QOS classification comprises:
- generating the QOS classification based on the obtained at least one parameter representing the at least one data rate difference and based on at least one second predefined threshold value.

6. The method of claim 5,
wherein the predefined data collection interval and the upshift interval are substantially equal, and wherein each of those intervals preferably is circa 15 minutes.

7. The method of claim 5 or 6 when dependent on any one of claims 2-3,
wherein the weighting of the obtained at least one parameter representing the number of times is chosen such that at least one increased data rate represented by the at least one data rate difference is correlated with at least one data rate increase event, and/or such that at least one decreased data rate represented by the at least one data rate difference is correlated with at least one data rate decrease event.

8. A data communication system comprising:
- a monitoring device for assessing a Quality Of Service (QOS) of a data communication line of a data communication system subject to activation of at least one online rate adaptation mechanism for transparently adapting a data rate on the data communication line based on channel conditions of the data communication line; the monitoring device comprising:
* obtaining means (41) configured for obtaining (51), at a computing device, at least one parameter pertaining to at least one prior activation of the at least one online rate adaptation mechanism during a predefined data collection interval; and
* generating means (42) configured for generating (52) a QOS classification of the data communication line based on the obtained at least one parameter;
- a Dynamic Line Management (DLM) mechanism for reconfiguring the data communication line based on the generated QOS classification;
**characterised in that**
- said at least one online rate adaptation mechanism comprises one or both of SRA and SOS.

9. The system of claim 8,
wherein the obtaining means are configured for:
- obtaining, at the computing device, at least one parameter representing a number of times that the at least one online rate adaptation mechanism was activated to produce one of a data rate decrease event or a data rate increase event on the data communication line during the predefined data collection interval; and
wherein the generating means are configured for:
- generating a weighting of the obtained at least one parameter representing the number of times; and
- comparing the generated weighting with at least one first predefined threshold value.

10. The system of claim 9,
wherein the generating means are configured to chose the weighting of the obtained at least one parameter representing the number of times such that a greater weight is associated to a data rate decrease event than to a data rate increase event.

11. The system of claim 8 or 9,
wherein the obtaining means are configured such that the predefined data collection interval is at least a time frame of circa 12 hours, preferably a time frame of a multiple of circa 12 hours.

12. The system of any one of the claims 8-11,
comprising:
- setting means configured for setting at least one of the predefined data collection interval and an upshift interval of the at least one online rate adaptation mechanism, such that the data collection interval is less than or equal to the upshift interval; wherein the upshift interval is an interval usable by the at least one online rate adaptation mechanism in order to decide whether or not to increase the data rate on the data communication line;
wherein the obtaining means are configured for:
- obtaining, at the computing device, at least one parameter representing at least one data rate difference of a data rate of the data communication line, over the data collection interval, due to the at least one prior activation of the at least one online rate adaptation mechanism during the predefined data collection interval; and
wherein the generating means are configured for:
- generating the QOS classification based on the obtained at least one parameter representing the at least one data rate difference and based on at least one second predefined threshold value.

13. The system of claim 12,
wherein the obtaining means are configured such that the predefined data collection interval and the upshift interval are substantially equal, and wherein each of those intervals preferably is circa 15 minutes.

14. The system of claim 12 or 13 when dependent on any one of claims 9-10,
wherein the generating means are configured to chose the weighting of the obtained at least one parameter representing the number of times such that at least one increased data rate represented by the at least one data rate difference is correlated with at least one data rate increase event, and/or such that at least one decreased data rate represented by the at least one data rate difference is correlated with at least one data rate decrease event.

15. A computer program product comprising a computer-executable program of instructions for performing, when executed on a computer, the steps of the method of any one of claims 1-7.
